# EUROPEAN PATENT APPLICATION

(11) **EP 1 670 230 A2**
(43) Date of publication of application: **14.06.2006**
(21) Application number: 05110459.4
(22) Date of filing: 08.11.2005
(51) Int. Cl.: H04N 1/00, H04N 1/32

(54) **Method and device to transmit and receive fax data**

(30) Priority: 19.11.2004 KR 2004095062
(71) Applicant: Samsung Electronics Co, Ltd, Suwon-si, Gyeonggi-do 442-742 (KR)
(72) Inventor: Hong, Seung-wook 201-804 Hyundai 2-cha Apt., Seoul (KR)
(74) Representative: Read, Matthew Charles

(57) **Abstract**

A method and device to transmit and/or receive fax data in a fax machine or a multifunctional device including a fax function. The method of transmitting the fax data may include transmitting fax data intended to be transmitted to an external device using a user datagram protocol (UDP), receiving a signal requesting that the fax data be re-transmitted from the external device when an error occurs in the transmission of the fax data, and re-transmitting the fax data to the external device in response to the request signal. Accordingly, the fax on a receiving end checks whether a transmission error occurred when data is transmitted from a fax of a transmitting end using a UDP, and, when a transmission error is present, transmits a request signal requesting that the data be re-transmitted to the fax on the transmitting end. At this point, the data is immediately re-transmitted. Therefore, reliability of fax data transmission is increased and the time required for data transmission can be reduced.

## Description

The invention relates to a method and device to transmit and receive fax data in a fax machine or a multifunctional device including fax functions, and more particularly, to a method and device to transmit and receive fax data by which it is checked on a receiving end if data transmitted using a user datagram protocol (UDP) has a transmission error, and when an error is determined to exist, a request signal requesting that data be re-transmitted is sent to a transmitting end, and the data is immediately re-transmitted.

In general, fax machines and multifunctional devices including fax functions mainly used to transmit and receive simple documents are widely used to transmit and receive various documents and drawings in offices and homes. Recently, with the development of Internet related technologies, Internet fax machines have been used to transmit and receive fax data over the Internet instead of over telephone networks. Internet fax machines take advantage of low Internet usage fees to reduce overseas fax charges by 30 - 50 percent relative to fax machines using telephone networks, and are thus useful for the reduction of communication costs to companies.

Fax machines and multifunctional devices having fax functions which transmit and receive data using the Internet should offer both rapidity and reliability of data transmission simultaneously such that transmitted fax data can be received in real-time by a receiving end without an error.

The invention provides a method and device to transmit and receive fax data in a fax machine or a multifunctional device including fax functions, and more particularly, to a method and device to transmit and receive fax data by which it is checked on a receiving end if data transmitted using a user datagram protocol (UDP) has a transmission error, and when an error exists, a request signal requesting that the data be re-transmitted is sent to a transmitting end, and the data is immediately re-transmitted.

Additional aspects and advantages of the invention will be set forth in part in the description which follows and, in part, will be evident from the description.invention.

The foregoing and/or other aspects and advantages of the present invention are achieved by providing a method of transmitting fax data, the method including transmitting fax data intended to be transmitted to an external device using a user datagram protocol (UDP), receiving from the external device a signal requesting that the fax data be re-transmitted when an error occurs in the transmission of the fax data, and re-transmitting the fax data to the external device in response to the request signal.

In the re-transmitting of the fax data, the fax data may be transmitted to the external device using a transmission control protocol (TCP).

The foregoing and/or other aspects and advantages of the present invention are also achieved by providing a method of receiving fax data, the method including receiving the fax data from the external device using a user datagram protocol (UDP), checking whether an error has occurred in the transmission of the fax data, and outputting a request signal which requests that the fax data be re-transmitted when an error is determined to be present.

The method may further include storing a gateway IP address and a public switched telephone network (PSTN) telephone line ID of the external device.

In the outputting of the re-transmitting request signal, the request signal may be transmitted to the external device which has the stored PSTN telephone line ID via a gateway having the stored IP address.
The foregoing and/or other aspects and advantages of the invention are also achieved by providing a fax system comprising a first fax and a second fax, wherein the first fax is arranged to transmit the fax data using a UDP and to re-transmit the fax data in response to a request signal received from the second fax requesting that the fax data be re-transmitted, and the second fax is arranged to receive the fax data from the first fax, checking whether an error is present in the received fax data and, if an error is determined to be present, to transmit the request signal to the first fax.

The first fax may re-transmit the fax data to the second fax using a TCP in response to the request signal received from the second fax, and the second fax may store a gateway IP address and a PSTN telephone line ID of the first fax, be connected to a gateway which has the stored IP address and transmit the request signal to an external device which has the stored PSTN telephone line ID.

The foregoing and/or other aspects and advantages of the invention are also achieved by providing a fax device to transmit and receive fax data to and from an external device, including a receiving unit to receive the fax data and a request signal requesting that the fax data be re-transmitted from the external device, an error determining unit to determine whether an error is present in the received fax data and to generate a request signal requesting that the fax data be re-transmitted when an error is determined to be present, a data generating unit to generate fax data to be transmitted, and a transmitting unit to transmit the generated request signal to the external device and the generated fax data to the external device using a UDP and to re-transmit the fax data to the external device when the request signal is received.

The transmitting unit may re-transmit the fax data to the external device using a TCP when receiving the re-transmitting request data.

The fax device my further include a memory to store a gateway IP address and a PSTN telephone line ID of an external device, and a memory controlling unit to control the memory to store the gateway IP address and PSTN telephone line ID of the external device when the receiving unit receives the fax data from the external device.

The transmitting unit may be connected to a gateway which has the IP address stored in the memory and transmits the request signal to the external device which has the stored PSTN telephone line ID.

The method of transmitting and receiving fax data can be implemented by a computer readable recording medium having embodied thereon a computer program for the method.

Embodiments of the invention will now be described by way of example with reference to the accompanying drawings, of which:
Figure 1 is a block diagram of a structure of a fax data transmitting and/or receiving system according to an embodiment of the invention;
Figure 2 is a block diagram of a structure of a fax device according to an embodiment of the invention;
Figure 3 is a flowchart illustrating a method of transmitting and/or receiving fax data according to an embodiment of the invention; and
Figure 4 is a flowchart illustrating a method of transmitting and/or receiving fax data according to another embodiment of the invention.

Reference will now be made in detail to embodiments of the invention, examples of which are illustrated in the accompanying drawings, wherein like reference numerals refer to the like elements throughout.

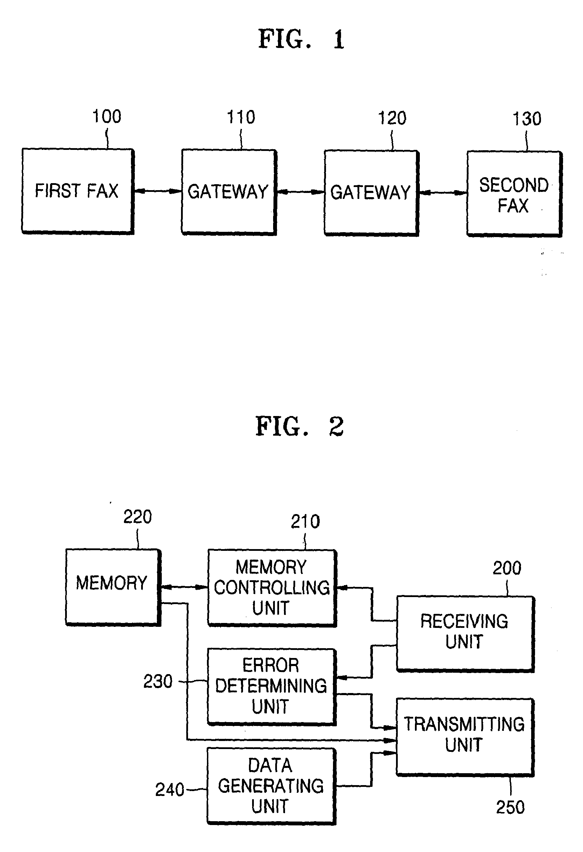

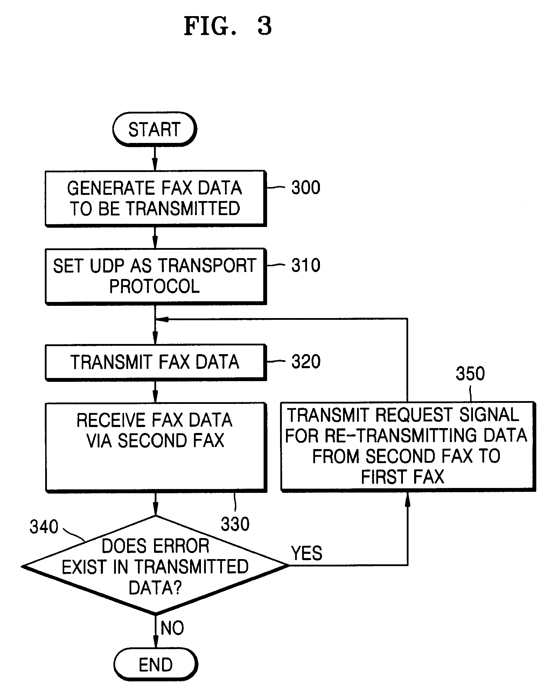

Referring to Figure 1, a fax data transmitting and/or receiving system according to an embodiment of the invention includes a first fax 100, a gateway 110 of a transmitting end, a gateway 120 of a receiving end, and a second fax 130. The operation of the fax data transmitting and/or receiving system will be described with reference to a flowchart illustrating an example of a method of transmitting and/or receiving fax data illustrated in Figure 3.

The first fax 100, which is on a transmitting end, receives the number of the second fax 130, which is on a receiving end, generates fax data intended to be transmitted in units of packets and outputs the generated fax data (operation 300). The gate way 110 on the transmitting end receives the output fax data and sets a user datagram protocol (UDP) as a protocol to transmit the data (operation 310). The UDP and a transmission control protocol (TCP) are protocols used to transmit and/or receive fax data over the Internet. The size of transmission/receipt data of the UDP which has an 8-byte header is small, and thus the time required to transmit and/or receive data is reduced. However, the UDP does not provide information about whether the receiving end has received the data without an error, or the order in which the data packets are received by the transmitting end. By way of contrast, the TCP has a 20 to 24-byte header and provides information about whether the receiving end receives the data without an error and the order in which the data packets are received by the transmitting end. However, it takes more time to transmit and/or receive the data using the TCP than the UDP. Therefore, fax data is transmitted and received over the Internet using the UDP. The use of the UDP as the transport protocol is set in operation 310.

The gateway 110 of the transmitting end transmits the fax data using a UDP port (operation 320), and the gateway 120 of the receiving end receives the transmitted fax data by opening a UDP port (operation 330).

The second fax 130 of a receiving end receives the fax data, and checks whether an error occurred during the transmitting and/or receiving of the data (operation 340). A data transmitting and/or receiving error indicates a failure to transmit and/or receive data due to several environmental causes such as disconnection from the Internet or loss of fax data when transmitting and/or receiving data. A method of checking the data transmitting/receiving error is described in International Telecommunication Union-T (ITU-T) Recommendation T.30.

When an error is determined to exist in the received fax data, the second fax 130 generates a signal to request re-transmission of the fax data and transmits the request signal to the transmitting end through the gateway 120 of the receiving end (operation 350). When the first fax 100 receives the request signal to re-transmit data from the receiving end, the first fax 100 re-transmits the fax data to the gateway 120 of the receiving end via the gateway 110 of the transmitting end. When the fax data is re-transmitted, the gateway 110 of the transmitting end may use a TCP as a transport protocol and may transmit the fax data using a TCP port, and the gateway 120 of the receiving end may receive the transmitted fax data by opening a TCP port. The gateways 110 and 120 may be included in the first fax 100 and the second fax 130, respectively.

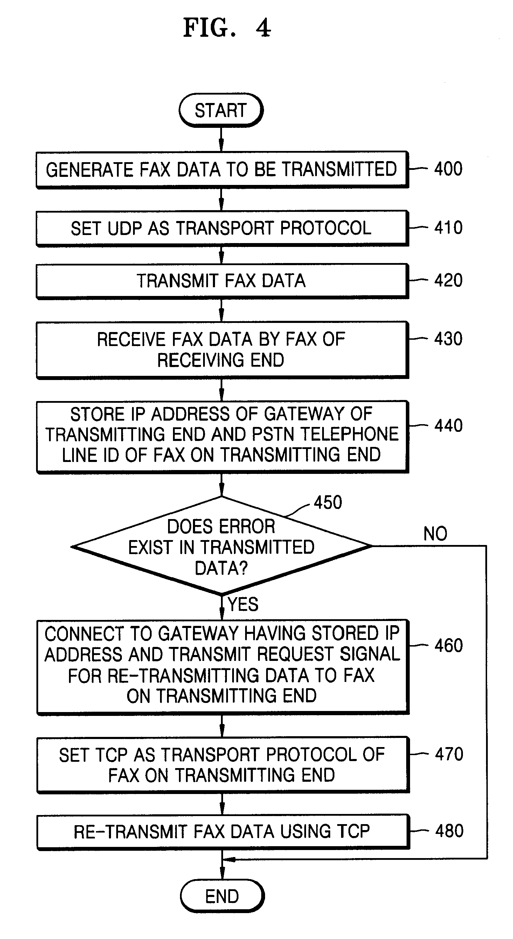

Figure 2 is a block diagram of a fax device according to an embodiment of the invention. Referring to Figure 2, the fax device of this embodiment includes a receiving unit 200, a memory controlling unit 210, a memory 220, an error determining unit 230, a data generating unit 240, and a transmitting unit 250. The operation of the fax device illustrated in Figure 2 will be described with reference to a flowchart illustrating a method of transmitting and receiving fax data according to another embodiment of the invention, illustrated in Figure 4.

The data generating unit 240 generates fax data to be transmitted (operation 400), and the transmitting unit 250 sets a UDP as a transport protocol (operation 410) and transmits the generated fax data to a fax on a receiving end (operation 420).

The receiving unit 200 of the fax on the receiving end receives the fax data transmitted from the transmitting unit 250 of the fax on a transmitting end and checks a gateway IP address and a public switched telephone network (PSTN) telephone line ID of the fax on the transmitting end (operation 430). The memory controlling unit 210 of the fax of the receiving end stores the checked gateway IP address and PSTN telephone line ID of the fax of the transmitting end in the memory 220 (operation 440).

The error determining unit 230 of the fax on the receiving end determines whether an error occurred during the transmission and reception of the fax data (operation 450). If it is determined that an error did occur, after the transmitting unit 250 of the fax of the receiving end is connected to a gateway of the fax on the transmitting end, i.e., the gateway having the IP address stored in the memory 220, the transmitting unit 250 is connected to the fax on the transmitting end having the PSTN telephone line ID stored in the memory 220, and transmits a signal requesting that the fax data be re-transmitted (operation 460).

When the receiving unit 200 on the fax of the transmitting end receives the signal requesting that the fax data be re-transmitted, the transmitting unit 250 of the fax on the transmitting end sets a TCP as a transport protocol to re-transmit the fax data (operation 470), receives the fax data intended to be transmitted, and re-transmits the received fax data to the fax on the receiving end (operation 480).

Since Internet fax systems which transmit and receive fax data over the Internet include fax-to-fax, PC (personal computer)-to-fax, web-to-fax, and e-mail-to-fax systems, the operation of the fax system described above is not limited to the transmitting and/or receiving of fax data between a fax on the transmitting end and a fax on the receiving end, and can be applied to a case where data generated by a PC, on an Internet web site, or in an e-mail is transmitted by fax.

The invention can also be embodied as computer readable codes on a computer readable recording medium. A computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices and carrier waves (such as data transmission through the Internet).

As described above, in a method and device of transmitting and receiving fax data, a fax on a receiving end checks whether data transmitted using a UDP from a fax on a transmitting end has a transmission error, and when a transmission error is determined to be present, a signal requesting that the data be re-transmitted is transmitted to a fax on a transmitting end, and the data is immediately re-transmitted. Accordingly, reliability of fax data transmission is increased and the time required for data transmission can be reduced.

Although several embodiments of the invention have been shown and described, it will be appreciated by those skilled in the art that changes may be made in these embodiments without departing from the principles and spirit of the general inventive concept, the scope of which is defined in the appended claims.

## Claims

1. A method of transmitting fax data to an external device from a device having a fax function, the method comprising:
transmitting the fax data to an external device using a user datagram protocol (UDP);
receiving from the external device a signal requesting that the fax data be re-transmitted when an error occurs in the transmission of the fax data; and
re-transmitting the fax data to the external device in response to the request signal.

2. The method of claim 1, wherein in the re-transmitting of the fax data, the fax data is transmitted to the external device using a transmission control protocol (TCP).

3. A method of receiving fax data from an external device of a device having a fax function, the method comprising:
receiving the fax data from the external device using a user datagram protocol (UDP);
checking whether an error has occurred in the transmission of the fax data; and
if said step of checking determines that an error is present, outputting a request signal which requests that the fax data be re-transmitted.

4. The method of claim 3, further comprising:
storing a gateway IP address and a public switched telephone network (PSTN) telephone line ID of the external device.

5. The method of claim 4, wherein, in the outputting of the re-transmitting request signal, the request signal is transmitted to the external device which has the stored PSTN telephone line ID via a gateway having the stored IP address.

6. A fax system comprising:
a first fax (100); and
a second fax (130);
wherein
the first fax (100) is arranged to transmit fax data to the second fax (130) using a UDP and to re-transmit the fax data in response to a request signal received from the second fax (130) requesting that the fax data be re-transmitted; and
the second fax is arranged to receive the fax data from the first fax, to check whether an error is present in the received fax data and, if an error is present, to transmit the request signal to the first fax.

7. The fax system of claim 6, wherein the first fax re-transmits the fax data to the second fax using a TCP in response to the request signal received from the second fax.

8. The fax system of claim 6 or 7, wherein the second fax stores a gateway IP address and a PSTN telephone line ID of the first fax, and is arranged to be connected to a gateway which has the stored IP address and to transmit the request signal to an external device which has the stored PSTN telephone line ID.

9. A fax device to transmit and receive fax data to and from an external device, the fax device comprising:
a receiving unit (200) arranged to receive from the external device first fax data and a first request signal requesting that second fax data transmitted by the fax device be re-transmitted;
an error determining unit (230) to determine whether an error is present in the first fax data and to generate a second request signal requesting that the first fax data be re-transmitted if an error is present;
a data generating unit (240) arranged to generate the second fax data; and
a transmitting unit (250) arranged to transmit the generated request signal to the external device and the second fax data to the external device using a UDP and to re-transmit the fax data to the external device if the first request signal is received.

10. The fax device of claim 9, wherein the transmitting unit re-transmits the second fax data to the external device using a TCP.

11. The fax device of claim 9 or 10, further comprising:
a memory (220) arranged to store a gateway IP address and a PSTN telephone line ID of an external device; and
a memory controlling unit (210) arranged to control the memory to store the gateway IP address and PSTN telephone line ID of the external device when the receiving unit receives the first fax data from the external device.

12. The fax device of claim 11, wherein the transmitting unit is arranged to be connected to a gateway which has the IP address stored in the memory and to transmit the second request signal to the external device which has the stored PSTN telephone line ID.

13. A computer program comprising instructions which, when executed on a computer, cause said computer to execute a method according to any one of claims 1 to 5.

14. A computer readable recording medium comprising a computer program according to claim 13.
